# EUROPEAN PATENT SPECIFICATION

(11) **EP 2 797 852 B1**
(45) Date of publication and mention of the grant of the patent: **31.07.2019**
(21) Application number: 12852457.6
(22) Date of filing: 07.12.2012
(51) Int. Cl.: B32B 18/00, C04B 35/573, C04B 35/58, C04B 35/591, C04B 35/628, C04B 35/80, F01D 25/00, H04W 4/02, H04W 4/80

(54) **PROCESS OF PRODUCING CERAMIC MATRIX COMPOSITES**
VERFAHREN ZUR HERSTELLUNG VON KERAMIKMATRIX-VERBUNDWERKSTOFFEN
PROCÉDÉ DE PRODUCTION DE COMPOSITES À MATRICE CÉRAMIQUE

(30) Priority: 29.12.2011 US 201161581129 P; 26.11.2012 US 201213685038
(43) Date of publication of application: 05.11.2014
(73) Proprietor: General Electric Company, Schenectady, NY 12345 (US)
(72) Inventor: KIRBY, Glen, Harold, Cincinnati, OH 45215 (US); STEIBEL, James, Dale, Cincinnati, OH 45215 (US); GOSS, Nathaniel, David, Cincinnati, OH 45215 (US)
(74) Representative: Openshaw & Co.
(86) International application number: PCT/US2012/068329
(87) International publication number: WO 2013/103469

(56) References cited:
- EP-A1- 1 059 274
- EP-A2- 2 338 861
- US-A- 5 294 489
- US-A- 5 552 352
- US-A- 5 762 863
- US-A- 5 840 221
- US-A- 6 024 898
- US-A1- 2001 046 563
- US-A1- 2006 163 773
- US-A1- 2010 279 845
- KOOI B J ET AL: "STRUCTURE-PROPERTY RELATIONS FOR SILICON NITRIDE MATRIX COMPOSITES REINFORCED WITH PYROLYTIC CARBON PRE-COATED HI-NICALON FIBERS", JOURNAL OF MATERIALS SCIENCE, KLUWER ACADEMIC PUBLISHERS, DORDRECHT, vol. 34, no. 19, 1 October 1999 (1999-10-01), pages 4737-4749, XP000854084, ISSN: 0022-2461, DOI: 10.1023/A:1004626803387

## Description

### CROSS REFERENCE TO RELATED APPLICATIONS

### STATEMENT REGARDING FEDERALLY SPONSORED RESEARCH

This invention was made with government support under Contract No. N00421-08-C-0041 awarded by the Navy. The Government has certain rights in the invention.

### BACKGROUND OF THE INVENTION

The present invention generally relates to ceramic matrix composite (CMC) articles and processes for their production. More particularly, this invention is directed to a process of producing silicon-containing CMC articles that includes processing steps capable of yielding CMC articles that exhibit desirable physical, mechanical, and microstructural properties at elevated temperatures.

Higher operating temperatures for gas turbine engines are continuously sought in order to increase their efficiency. Though significant advances in high temperature capabilities have been achieved through formulation of iron, nickel and cobalt-base superalloys, alternative materials have been investigated. CMC materials are a notable example because their high temperature capabilities can significantly reduce cooling air requirements. CMC materials generally comprise a ceramic fiber reinforcement material embedded in a ceramic matrix material. The reinforcement material may be discontinuous short fibers dispersed in the matrix material or continuous fibers or fiber bundles oriented within the matrix material, and serves as the load-bearing constituent of the CMC. In turn, the ceramic matrix protects the reinforcement material, maintains the orientation of its fibers, and serves to dissipate loads to the reinforcement material. Individual fibers (filaments) are often coated with a release agent, such as boron nitride (BN), to form a de-bond layer that allows for limited and controlled slip between the fibers and the ceramic matrix material.

Continuous fiber reinforced ceramic composites (CFCC) are a type of CMC that offers light weight, high strength, and high stiffness for a variety of high temperature load-bearing applications, including shrouds, combustor liners, vanes, blades, and other high-temperature components of gas turbine engines. A CFCC material is generally characterized by continuous fibers (filaments) that may be arranged to form a unidirectional array of fibers, or bundled in tows that are arranged to form a unidirectional array of tows, or bundled in tows that are woven to form a two-dimensional fabric or woven or braided to form a three-dimensional fabric. For three-dimensional fabrics, sets of unidirectional tows may, for example, be interwoven transverse to each other. Of particular interest to high-temperature applications are silicon-based composites, such as silicon carbide (SiC) as the matrix and/or reinforcement material. SiC fibers have also been used as a reinforcement material for a variety of other ceramic matrix materials, including titanium carbide (TiC), silicon nitride (Si₃N₄), and alumina (Al₂O₃).

Examples of CMC materials and particularly SiC/Si-SiC (fiber/matrix) continuous fiber-reinforced ceramic composites (CFCC) materials and processes are disclosed in U.S. Patent Nos. 5,015,540, 5,330,854, 5,336,350, 5,628,938, 6,024,898, 6,258,737, 6,403,158, and 6,503,441, and U.S. Patent Application Publication No. 2004/0067316. Such processes generally entail the fabrication of CMCs using multiple prepreg layers, each in the form of a "tape" comprising the desired ceramic fiber reinforcement material, one or more precursors of the CMC matrix material, and organic resin binders. According to conventional practice, prepreg tapes can be formed by impregnating the reinforcement material with a slurry that contains the ceramic precursor(s) and binders. Preferred materials for the precursor will depend on the particular composition desired for the ceramic matrix of the CMC component, for example, SiC powder and/or one or more carbon-containing materials that are ultimately converted to SiC upon reaction with molten Si. Other typical slurry ingredients include organic binders that promote the pliability of prepreg tapes, and solvents for the binders that promote the fluidity of the slurry to enable impregnation of the fiber reinforcement material.

After allowing the slurry to partially dry and, if appropriate, partially curing the binders (B-staging), the resulting prepreg tape is laid-up with other tapes, and then debulked and, if appropriate, cured while subjected to elevated pressures and temperatures to produce a preform. The preform is then heated (fired) in a vacuum or inert atmosphere to decompose the binders, remove solvents, and convert the precursor to the desired ceramic matrix material. Due to decomposition of the binders, the result is a porous CMC body that may undergo melt infiltration (MI) to fill the porosity and yield the CMC component. Melt-infiltration processes used to produce SiC matrices generally entail infiltrating the porous CMC body with molten silicon supplied externally. The molten silicon infiltrates into the porosity, reacts with the carbon content of the matrix to form silicon carbide, and fills the porosity to yield the desired CMC component. Specific processing techniques and parameters for the above process will depend on the particular composition of the materials.

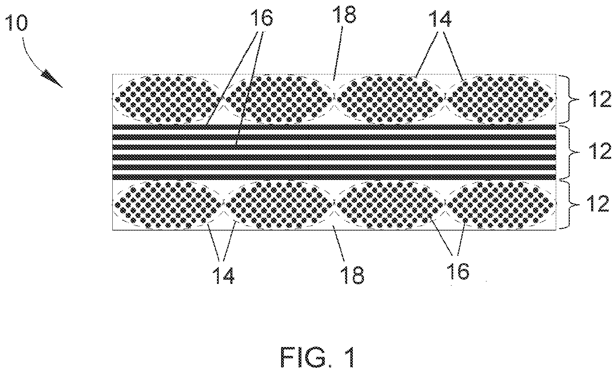

An example of a CFCC material 10 is schematically depicted in FIG. 1 as comprising multiple laminae 12, each derived from an individual prepreg tape that comprised unidirectionally-aligned reinforcement material 14 impregnated with a ceramic matrix precursor. As a result, each lamina 12 contains the reinforcement material 14 encased in a ceramic matrix 18 formed, wholly or in part, by conversion of the ceramic matrix precursor during firing and melt infiltration.

CMCs and CFCCs articles produced to contain silicon carbide fibers in a silicon carbide matrix in the manner discussed above contain elemental silicon and/or silicon alloy, and therefore cannot be used at temperatures exceeding the melting point of silicon or any low-melting silicon alloy (for example, 1360°C) in the matrix because the molten silicon may react with release agents such as boron nitride on the fibers/tows, causing embrittlement of the composite. Furthermore, molten silicon tends to seep from the surface of the composite article, where it may react with and damage an environmental barrier coating (EBC) protecting the article and potentially any metallic or other ceramic component contacting or in close proximity to the article.

Some approaches to eliminating or at least reducing the content of elemental silicon or low-melting silicon alloys in a CMC article are disclosed in U.S. Published Patent Application No. 2010/0279845 to Kebbede et al. According to Kebbede et al., the removal of free silicon and/or silicon alloy from a CMC article creates internal cavities, and any remaining silicon and/or silicon alloy can be converted to a refractory ceramic material by reaction with reactive gaseous species. Access to the cavities can be obstructed by at least partially filling the cavities and/or plugging the surface access routes to the cavities with a refractory solid. While not intending to promote any particular interpretation, it appears that Kebbede et al. describe melt-infiltration CMC bodies from which the low melting silicon or silicon alloy has been removed so that it cannot react with the fibers or release agents, and provide a method to prevent internal oxidation of the material due to the porosity that is created by the absence of the silicon or silicon alloy. However, it is believed that the absence of the silicon or silicon alloy that serves to distribute stress to any number of individual fibers within a tow bundle also results in a significant debit in mechanical behavior. This debit in mechanical behavior can prevent the CMC from meeting design requirements necessary for turbine engine components even at low temperature.

US2001/046563 describes woven SiC fibers that are impregnated with a slurry containing carbon and silicon powder in equal mole number. The impregnated fiber preform is heated to 1420°C to react the carbon and silicon into SiC.

In view of the above, it can be appreciated that there is a continuing need for CMC articles that exhibit suitable physical, mechanical, and microstructural properties at elevated temperatures, and particularly temperatures exceeding the melting point of silicon.

### BRIEF DESCRIPTION OF THE INVENTION

The present invention provides a process for producing a silicon-containing CMC article that includes processing steps to enable the CMC article to exhibit suitable physical, mechanical, and microstructural properties at elevated temperatures, and particularly temperatures exceeding the melting point of silicon.

According to the invention, a process is provided for producing a silicon-containing CMC article, as defined in claim 1.

A technical effect of the invention is the ability to produce SiC-based CMC and CFCC articles that are capable of use at temperatures exceeding the melting point of elemental silicon and silicon alloys. While previous methods have sought to eliminate elemental silicon and low-melting silicon alloys from CMC articles to yield a matrix phase formed entirely of refractory silicon-based materials, such methods have yielded matrices that contain porosity and therefore are not fully dense. In contrast, the present invention is directed to producing CMC articles that are not only essentially free of elemental silicon and low-melting silicon alloys, but also contain a dense matrix that is essentially free of porosity, for example, contains less than 5 vol.% porosity.

Other aspects and advantages of this invention will be better appreciated from the following detailed description.

### BRIEF DESCRIPTION OF THE DRAWINGS

FIG. 1 schematically represents a fragmentary cross-sectional view of a CFCC article.

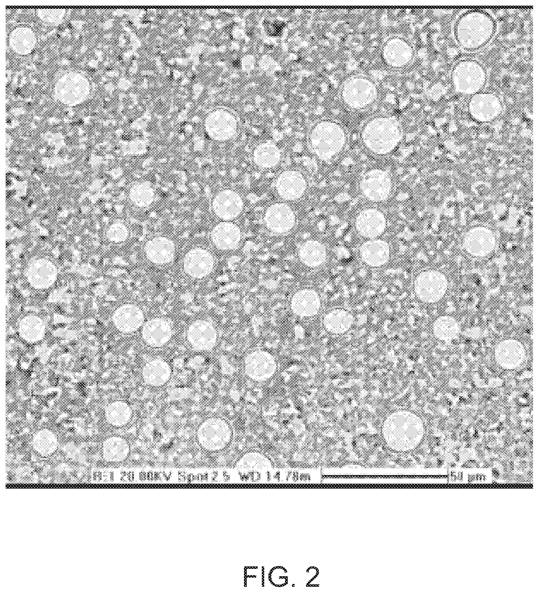

FIG. 2 is a scanned image of a CFCC article produced by a process within the scope of the invention.

### DETAILED DESCRIPTION OF THE INVENTION

The present invention will be described in terms of processes for producing CMC articles, including CFCC articles, that can be used at temperatures exceeding the melting point of low-melting silicon alloys (for example, 1357°C), and preferably up to temperatures of at least 1480°C, and therefore well over the melting point of silicon and low-melting alloys thereof. CMC materials used in the process of the invention are those containing silicon, such as CMC's containing silicon carbide as the reinforcement and/or matrix material, a particular example of which is continuous silicon carbide fibers in a matrix of silicon carbide. However, other silicon-containing materials are also within the scope of the invention, including ceramics such as silicon nitride and silicides (intermetallics) such as niobium silicide and molybdenum silicide. While various applications are foreseeable, particular applications for the component 10 include components of gas turbine engines, such as combustor liners, blades, vanes and shrouds within the turbine sections of gas turbines.

The following discussion of CMC articles of this invention will make reference to FIG. 1, which as noted previously is representative of a CFCC component 10 comprising multiple laminae 12, each derived from an individual prepreg that originally comprised unidirectionally-aligned tows 14 impregnated with a ceramic matrix precursor. As a result of debulking, curing and firing the laminate preform formed by the stacked prepregs, each lamina 12 contains unidirectionally-aligned fibers 16 encased in a matrix 18 that includes a silicon carbide phase that may be formed in part by conversion of the ceramic matrix precursor during firing and melt infiltration. However, as a particular aspect of the present invention, with further processing steps as described below the matrix 18 preferably does not contain an elemental silicon or silicon alloy phase as previously ascribed to CMCs produced by silicon melt infiltration processes. Instead, the matrix 18 is preferably either entirely formed of one or more ceramic materials.

As a CFCC component 10, the tows 14 are preferably unidirectional in each lamina 12, i.e., oriented side-by-side and parallel to each other. Suitable fiber diameters, tow diameters and center-to-center tow spacings will depend on the particular application, the thicknesses of the laminae 12, and other factors, and therefore are not represented to scale in FIG. 1. According to known practice, the individual fibers 16 of the tows 14 are preferably coated with one or more release agents to form a de-bond fiber coating (not shown) that allows for limited and controlled slip between the matrix 18 and the tows 14 and their individual fibers 16. Suitable materials for the fiber coating include boron nitride (BN), silicon-doped BN, silicon nitride (Si₃N₄), silicon carbide (SiC), hafnium carbide (HfC), hafnium nitride (HfN), zirconium carbide (ZrC), zirconium nitride (ZrN), tantalum carbide (TaC), tantalum nitride (TaN), and mixtures thereof. A preferred fiber coating comprises multiple layers of one or more of these compounds. As cracks develop in the component 10, fibers 16 that bridge the crack act to redistribute the load to adjacent fibers 16 and regions of the matrix 18, thus inhibiting or at least slowing further propagation of the crack.

As previously noted, during the fabrication of the component 10 a desired number of prepreg tapes are laid-up to form a preform that undergoes further processing to yield the component 10. Each tape is formed to contain a reinforcement architecture (formed by the fibers 16) encased within a precursor of the desired material for the matrix 18, e.g., SiC. One of ordinary skill in the art will recognize that an important aspect of the invention is the use of unidirectional fiber prepreg tapes to build up the composite structure. CMC architectures derived from unidirectional prepreg offer improved mechanical properties at elevated temperatures above the melting point of silicon. It is believed that because each fiber is well-isolated via the refractory matrix phase, mechanical loads can be transferred more efficiently to each individual fiber, which in turn promotes improved mechanical properties. According to conventional practice, such prepreg tapes can be formed in a single operation, for example, by applying a precursor-containing slurry during winding of a continuous strand of tow 16 onto a drum. Following the winding operation, the slurry is allowed to partially dry and the resulting prepreg tape is removed from the drum, laid-up with other tapes, and then debulked and cured (if appropriate) while subjected to elevated pressures and temperatures to form a cured preform. The preform is then heated in vacuum or in an inert atmosphere to decompose the organic binders and yield a porous rigid preform.

The following processing techniques are intended to greatly improve the temperature capability of a CMC article produced by processing steps of the type described above by reducing or entirely eliminating porosity within the CMC article, as well as reducing or entirely eliminating any residual elemental silicon and/or low-melting silicon alloys in the CMC article.

According to a preferred aspect of the invention, reduced porosity content can be accomplished through a densification process that comprises one or more infiltration steps. For example, a series of polymer infiltration and pyrolysis (PIP) steps can be used to fill porosity and simultaneously eliminate the possibility of having any residual silicon or low-melting silicon alloy. Such a PIP process utilizes a polymeric precursor that when pyrolyzed (preferably in an inert atmosphere, for example, a vacuum or argon) forms a desired ceramic by itself. Examples of desirable ceramics include silicon carbide, silicon nitride, silicon oxycarbide, silicon oxynitride, silicon carbonitride, silicon oxycarbonitride, or mixtures thereof. These compounds have high melting points (above 1480°C) compared to silicon and its low-melting alloys.

Additional or alternative infiltration techniques that may be used include chemical vapor infiltration (CVI) and melt infiltration (MI). As previously practiced in the art, the MI process has been used in cases where the preform was formed with a slurry that, upon firing, results in a carbon-containing preform that preferably reacts with molten silicon to form silicon carbide. In the present invention, carbon additions can also be achieved by subjecting the porous preform to direct infiltration of carbon black particles or burnout of a carbon-yielding resin that had been infiltrated into the pore space. In another approach, the pore space could be filled with a refractory metal or a refractory metal-containing compound that forms a refractory silicide phase upon reaction with molten silicon.

The densification processes noted above can benefit from the use of certain prepreg slurries that preferably do not leave residual elemental silicon or silicon alloys in the porous preform, and preferably yield a continuous network of silicon carbide or carbon to provide strength within the porous preform prior to infiltration. Various precursor-containing slurries have been applied to continuous fibers and tows to produce prepreg tapes. Typical slurry compositions have contained, in addition to the desired ceramic precursor(s), ceramic constituents of the matrix (for example, silicon carbide), organic resins that serve as processing aids (for example, polyvinybutyral and poly isobutyl methacrylate), solvents (for example, toluene, MIBK, ethylbenzene, etc.), and plasticizers for the binders (for example, dibutyl phthalate). Slurry compositions for use in the present invention contain a 1:1 stoichiometric mixture of elemental silicon and carbon black that react during
firing of the preform at temperatures of 1430°C to 1460°C. The slurry composition may additionally contain one or more organic binders that can be pyrolyzed to form a network of carbon char (for example, furanic resins and/or phenolic resins). In any case, the result is preferably a cured and rigid preform that can be essentially free of elemental silicon and silicon alloys, and in which the fibers are encased in a porous yet continuous network of silicon carbide filaments or carbon char (depending on the particulars of the embodiment as described above). This porosity can then be eliminated by the densification processes discussed above, such that the network of silicon carbide filaments or carbon char provides a scaffold for reinforcement to prevent cracking due to the stresses involved in pyrolysis of the polymeric precursor, particular during the first densification cycle.

Additional processing steps can be performed to extract any residual elemental silicon and/or low-melting silicon alloy phase within the CMC article. Slurry compositions may contain silicon carbide, organic resins that serve as processing aids (for example, polyvinybutyral), organic resins that are pyrolyzed to form a network of carbon char, solvents (for example, toluene, MIBK, alcohols, and acetone), etc.), and plasticizers for the binders (for example, dibutyl phthalate). Coated silicon carbide fibers may be drawn through this slurry and wound upon a drum to form prepreg tapes. The tapes are laid-up in the desired orientation and consolidated under heat and pressure to form a laminate. The laminate is heated in nitrogen, argon, or vacuum to burn out a portion of the organic binders and resins, while also converting a portion of the binders and resins to carbon char. The burned-out porous laminate can then be melt infiltrated by heating an external source of silicon or silicon alloy such that it melts and flows into the laminate. A first portion of this molten silicon or silicon alloy reacts with the precursor carbon in the porous laminate to form silicon carbide, and a second portion of the molten silicon or silicon alloy fills the porosity in the laminate. Upon cooling, the silicon or silicon alloy filling the pore space solidifies. This silicon or silicon alloy is the desired phase to extract from the melt-infiltrated CMC to form a porous preform.

In the case where a melt infiltration is carried out where an external source of silicon or silicon alloy is used as the infiltrant, the slurry can optionally contain refractory metals or compounds in addition to silicon carbide and carbon black. The refractory metal reacts with residual elemental silicon and/or low-melting silicon alloy to form refractory silicides and serves to reduce the overall residual silicon or silicon alloy content in the MI CMC that would need to be extracted. Suitable refractory metals and compounds include molybdenum, molybdenum silicide (MosSi3), molybdenum carbide, molybdenum nitride, tantalum, tantalum carbide, tantalum silicide, tantalum nitride, niobium, niobium carbide, niobium silicide, niobium nitride, or combinations thereof. Optionally, these materials can be incorporated into the external source of silicon or silicon alloy so that a refractory silicide forms once the silicon content in the melt is sufficiently depleted by reaction with carbon black. This approach would ensure that refractory silicides precipitate within the residual silicon upon cooling, thereby reducing the volume of low melting silicon or silicon alloy that would need to be extracted.

A suitable extraction technique is a powder pack extraction process that involves surrounding the CMC article with a porous material and heating until the silicon or silicon alloy is molten. Porous materials may include, but are not limited to, carbon black, graphite, industrial diamond, silicon carbide, silicon nitride, molybdenum and its silicides, carbides and nitrides, tungsten and its silicides, carbides and nitrides, tantalum and its silicides, carbides and nitrides, and/or niobium and its silicides, carbides and nitrides. Preferred porous materials include those that provide a chemical driving force to draw out the silicon or silicon alloy, do not react strongly with the silicon carbide in the melt-infiltrated body and, in case there is a shallow reaction layer, are easily removed by grinding or grit blasting to ensure that the pore network left behind is open for subsequent infiltration. Preferred porous materials include molybdenum, tungsten, tantalum, niobium metal, and niobium silicides. These materials are capable of adequately extracting residual silicon and silicon alloy and forming metal silicides on the surface of the CMC article that are easily removed by grit blasting to expose pore channels within the CMC article. Once exposed, the pore channels can be filled with one or more precursors that can be converted to silicon carbide by a PIP, MI, or CVI technique.

Another suitable extraction technique is a liquid phase extraction process carried out by exposing the CMC article to a liquid that is corrosive to residual silicon alloy, but not to any other components of the CMC article. Examples of such liquids are hydrofluoric acid (HF), mixtures of hydrofluoric acid and other acids, strongly basic solutions such as aqueous NaOH, LiOH, KOH, etc., liquid metals such as gallium, indium, tin, and mercury, and multistage leaching processes that involve liquid metals, acids, and bases. The liquid phases can be heated to increase the rate at which they dissolve the residual silicon alloy. This is particularly true for liquid metals, which require an elevated temperature to activate the silicon alloy removal process. Heat treatments may be performed to eliminate any contaminants, for example, to evaporate fluorine or any metal in the pore channels. As before, the exposed pore channels can be filled with one or more precursors that can be converted to silicon carbide by a PIP, MI, or CVI technique.

Another suitable extraction technique is vaporization of silicon or silicon alloy at high temperature in a strong vacuum. As before, the exposed pore channels can be filled with one or more precursors that can be converted to silicon carbide by a PIP, MI, or CVI technique.

Once densification of a CMC article is complete, the resulting CMC article preferably comprises at least 90 vol.% silicon-based refractory compounds, which may include one or more of silicon compounded with elements such as carbon, nitrogen, oxygen, molybdenum, tantalum, niobium, and mixtures thereof. The matrix may also contain up to 5 vol.% porosity and up to 5 vol.% low-melting phases (phases that melt below 1480°C), such as pure elemental silicon, low-melting silicon alloys (e.g., silicon-boron alloy), low-melting silicon-based compounds (e.g., iron silicide), and/or combinations thereof. More preferably, the CMC articles have a matrix that contains less than 5% of the sum of low-melting phases and porosity. The most preferred CMC articles have a matrix that contains less than 5 vol.% porosity and is essentially free of low-melting phases.

An example of a dense microstructure that can be achieved with the present invention is shown in Figure 4. The microstructure is essentially free of silicon and silicon alloy phase, with the result that the microstructure is capable of structurally and chemically withstanding temperatures above the melting point of silicon and its low-melting alloys. For example, the microstructure is suitable for CMC components such as combustor liners, blades, vanes and shrouds, which can be installed in a gas turbine engine and subjected to temperatures of up to above 1480°C and possibly higher.

## Claims

1. A process for producing a silicon-containing CMC article, the process comprising:
depositing one or more coating layers on silicon carbide fibers;
drawing the coated silicon carbide fibers through a slurry to produce slurry-coated fiber material;
producing unidirectional prepreg tapes from the slurry-coated fiber material;
stacking the tapes to form a preform;
firing the preform to yield a porous fired preform; and then
densifying the porous fired preform by infiltrating porosity therein to yield a CMC article, wherein the composition of the slurry comprises a 1:1 stoichiometric mixture of elemental silicon and carbon black that react during firing of the preform at temperatures of 1430°C to 1460°C.

2. The process of claim 1, wherein the composition of the slurry comprises one or more organic binders that are pyrolyzed during the firing step to form a network of carbon char.

3. The process of claim 1, wherein the composition of the slurry comprises one or more refractory materials.

4. The process of claim 3, wherein the composition of the refractory materials is chosen from the group consisting of molybdenum, molybdenum silicide (Mo₅Si₃), molybdenum carbide, molybdenum nitride, tantalum, tantalum carbide, tantalum silicide, tantalum nitride, niobium, niobium carbide, niobium silicide, niobium nitride, and combinations thereof.

5. The process of claim 1, further comprising extracting residual elemental silicon and/or low-melting silicon alloy phase within the porous fired preform prior to the densifying step.

6. The process of claim 5, wherein the residual elemental silicon and/or low-melting silicon alloy phase is extracted using a powder pack extraction process.

7. The process of claim 6, wherein the powder pack extraction process is performed with a porous material chosen from the group consisting of molybdenum, tungsten, tantalum, niobium metal, and niobium silicides.

8. The process of claim 5, wherein the residual elemental silicon and/or low-melting silicon alloy phase is extracted using a liquid phase extraction process.

9. The process of claim 5, wherein the residual elemental silicon and/or low-melting silicon alloy phase is extracted using a vaporization process.

10. The process of claim 5, further comprising densifying the porous fired preform by infiltrating the porous fired preform using a series of polymer infiltration and pyrolysis steps, melt infiltration with elemental silicon and/or one or more silicon alloys, chemical vapor infiltration, or a combination thereof.

11. The process of claim 1, further comprising heat treating the porous fired preform to remove contaminants in pore channels of the porous fired preform prior to the densifying step.

12. The process of claim 1, wherein the densifying step comprises infiltrating the porous fired preform using a series of polymer infiltration and pyrolysis steps, melt infiltration with elemental silicon and/or one or more silicon alloys, chemical vapor infiltration, or a combination thereof.

13. The process of claim 12, wherein the densifying step comprises a series of polymer infiltration and pyrolysis steps comprising a polymeric precursor that when pyrolyzed forms a ceramic chosen from the group consisting of silicon carbide, silicon nitride, silicon oxycarbide, silicon oxynitride, silicon carbonitride, silicon oxycarbonitride, and combinations thereof.

14. The process of claim 1, further comprising installing the CMC article in a gas turbine engine and subjecting the CMC article to a temperature of at least 1480°C.

## Patentansprüche

1. Verfahren zur Herstellung eines siliziumhaltigen CMC-Artikels, wobei das Verfahren Folgendes umfasst:
Abscheiden einer oder mehrerer Überzugsschichten auf Siliziumcarbidfasern;
Ziehen der beschichteten Siliziumcarbidfasern durch eine Aufschlämmung, um mit Aufschlämmung beschichtetes Fasermaterial herzustellen;
Herstellen von einseitig gerichteten Prepreg-Bändern aus dem schlammbeschichteten Fasermaterial;
Stapeln der Bänder, um einen Vorformling zu bilden;
Brennen der Vorform, um eine poröse gebrannte Vorform zu erhalten; und anschließendes
Verdichten des porösen gebrannten Vorformlings durch Infiltrieren der Porosität darin, um einen CMC-Artikel zu erhalten, wobei die Zusammensetzung der Aufschlämmung eine stöchiometrische 1: 1-Mischung aus elementarem Silizium und Ruß enthält, die während des Brennens des Vorformlings bei Temperaturen von 1430 °C bis 1460 °C reagiert.

2. Verfahren nach Anspruch 1, wobei die Zusammensetzung der Aufschlämmung ein oder mehr organische Bindemittel enthält, die während des Brennschritts pyrolysiert werden, um ein Netz aus Kohlenstoffkohle zu bilden.

3. Verfahren nach Anspruch 1, wobei die Zusammensetzung der Aufschlämmung ein oder mehr feuerfeste Materialien enthält.

4. Verfahren nach Anspruch 3, wobei die Zusammensetzung der feuerfesten Materialien aus der Gruppe ausgewählt ist, bestehend aus Molybdän, Molybdänsilizid (Mo₅Si₃), Molybdäncarbid, Molybdännitrid, Tantal, Tantalcarbid, Tantalsilizid, Tantalnitrid , Niob, Niobcarbid, Niobsilizid, Niobnitrid und Kombinationen davon.

5. Verfahren nach Anspruch 1, das ferner das Extrahieren von verbleibendem elementarem Silizium und/oder niedrigschmelzender Silizium-Legierungsphase innerhalb des porösen gebrannten Vorformlings vor der Verdichtung umfasst.

6. Verfahren nach Anspruch 5, wobei das verbleibende elementare Silizium und/oder die niedrigschmelzende Siliziumlegierungsphase mittels eines Pulverpack-Extraktionsverfahrens extrahiert wird.

7. Verfahren nach Anspruch 6, wobei das Pulverpack-Extraktionsverfahren mit einem porösen Material durchgeführt wird, ausgewählt aus der Gruppe bestehend aus Molybdän, Wolfram, Tantal, Niobmetall und Niobsiliziden.

8. Verfahren nach Anspruch 5, wobei das verbleibende elementare Silizium und/oder niedrigschmelzende Siliziumlegierungsphase mittels eines Flüssigphasen-Extraktionsverfahrens extrahiert wird.

9. Verfahren nach Anspruch 5, wobei das verbleibende elementare Silizium und/oder die niedrigschmelzende Siliziumlegierungsphase mittels eines Verdampfungsverfahrens extrahiert wird.

10. Verfahren nach Anspruch 5, das ferner das Verdichten des porösen gebrannten Vorformlings durch Infiltrieren des porösen gebrannten Vorformlings unter Verwendung einer Reihe von Polymerinfiltrations- und Pyrolyse-Vorgängen, von Schmelzinfiltration mit elementarem Silizium und/oder einer oder mehreren Siliziumlegierungen, von chemischer Dampfinfiltration oder einer Kombination derselben umfasst.

11. Verfahren nach Anspruch 1, das ferner das Wärmebehandeln des porösen gebrannten Vorformlings umfasst, um Verunreinigungen in Porenkanälen des porösen gebrannten Vorformlings vor dem Verdichtungsschritt zu beseitigen.

12. Verfahren nach Anspruch 1, wobei das Verdichten das Infiltrieren des porösen gebrannten Vorformlings unter Verwendung einer Reihe von Polymerinfiltrations- und Pyrolyse-Vorgängen, von Schmelzinfiltration mit elementarem Silizium und/oder einer oder mehreren Siliziumlegierungen, von chemischer Dampfinfiltration oder einer Kombination derselben umfasst.

13. Verfahren nach Anspruch 12, wobei das Verdichten eine Reihe von Polymerinfiltrations- und Pyrolyse-Vorgängen umfasst, die einen polymeren Vorläufer beinhalten, der nach erfolgter Pyrolyse eine Keramik ausbildet, ausgewählt aus der Gruppe bestehend aus Siliziumcarbid, Siliziumnitrid, Siliziumoxidcarbid, Siliziumoxynitrid, Siliziumcarbonitrid, Siliziumoxycarbonitrid und Kombinationen derselben.

14. Verfahren nach Anspruch 1, das ferner das Installieren des CMC-Artikels in einem Gasturbinenmotor und das Aussetzen des CMC-Artikels einer Temperatur von mindestens 1480 °C umfasst.

## Revendications

1. Procédé de fabrication d'un article en CMC contenant du silicium, le procédé consistant à :
déposer une ou plusieurs couches de revêtement sur des fibres de carbure de silicium ;
étirer les fibres de carbure de silicium revêtues à travers une barbotine pour produire un matériau fibreux revêtu de barbotine ;
produire des bandes pré-imprégnées unidirectionnelles à partir du matériau fibreux revêtu de barbotine ;
empiler les bandes pour former une préforme ;
cuire la préforme pour produire une préforme cuite poreuse ; et puis
densifier la préforme cuite poreuse en y infiltrant une porosité pour produire un article en CMC, dans lequel la composition de la barbotine comprend un mélange stoechiométrique 1:1 de silicium élémentaire et de noir de carbone qui réagit lors de la cuisson de la préforme à des températures comprises entre 1430°C et 1460°C.

2. Procédé selon la revendication 1, dans lequel la composition de la barbotine comprend un ou plusieurs liants organiques qui sont pyrolysés pendant l'étape de cuisson pour former un réseau de produits de carbonisation.

3. Procédé selon la revendication 1, dans lequel la composition de la barbotine comprend un ou plusieurs matériaux réfractaires.

4. Procédé selon la revendication 3, dans lequel la composition des matériaux réfractaires est choisie dans le groupe constitué par le molybdène, le siliciure de molybdène (Mo₅Si₃), le carbure de molybdène, le nitrure de molybdène, le tantale, le carbure de tantale, le siliciure de tantale, le nitrure de tantale, le carbure de niobium, le niobium, le siliciure de niobium, le nitrure de niobium, et des combinaison correspondantes.

5. Procédé selon la revendication 1, comprenant en outre l'extraction du silicium élémentaire résiduel et / ou de la phase d'alliage de silicium bas point de fusion dans la préforme poreuse cuite avant l'étape de densification.

6. Procédé selon la revendication 5, dans lequel le silicium élémentaire résiduel et / ou la phase d'alliage de silicium bas point de fusion est extrait en utilisant un procédé d'extraction par bloc de poudre.

7. Procédé selon la revendication 6, dans lequel le procédé d'extraction par bloc de poudre est effectué avec un matériau poreux choisi dans le groupe constitué par le molybdène, le tungstène, le tantale, le métal niobium et les siliciures de niobium.

8. Procédé selon la revendication 5, dans lequel le silicium élémentaire résiduel et / ou la phase d'alliage de silicium bas point de fusion est extrait en utilisant un procédé d'extraction en phase liquide.

9. Procédé selon la revendication 5, dans lequel le silicium élémentaire résiduel et / ou la phase d'alliage de silicium bas point de fusion est extrait en utilisant un procédé de vaporisation.

10. Procédé selon la revendication 5, comprenant en outre la densification de la préforme cuite poreuse par infiltration de la préforme cuite poreuse en utilisant une série d'étapes d'infiltration de polymère et de pyrolyse, l'infiltration par fusion avec du silicium élémentaire et / ou un ou plusieurs alliages de silicium, l'infiltration chimique en phase vapeur, ou une combinaison correspondante.

11. Procédé selon la revendication 1, comprenant en outre le traitement thermique de la préforme cuite poreuse pour éliminer les contaminants dans les canaux de pores de la préforme cuite poreuse avant l'étape de densification.

12. Procédé selon la revendication 1, dans lequel l'étape de densification comprend l'infiltration de la préforme cuite poreuse en utilisant une série d'étapes d'infiltration de polymère et de pyrolyse, l'infiltration par fusion avec du silicium élémentaire et / ou un ou plusieurs alliages de silicium, l'infiltration chimique en phase vapeur, ou une combinaison correspondante.

13. Procédé selon la revendication 12, dans lequel l'étape de densification comprend une série d'étapes d'infiltration de polymère et de pyrolyse comprenant un précurseur polymère qui, lorsque pyrolysé, forme une céramique choisie dans le groupe constitué par le carbure de silicium, le nitrure de silicium, l'oxycarbure de silicium, l'oxynitrure de silicium, le carbonitrure de silicium, l'oxycarbonitrure de silicium, et des combinaison correspondantes.

14. Procédé selon la revendication 1, comprenant en outre l'installation de l'article CMC dans une turbine à gaz et à soumettre l'article CMC à une température d'au moins 1480°C.
